# EUROPEAN PATENT APPLICATION

(11) **EP 4 806 762 A1**
(43) Date of publication of application: **16.09.2026**
(21) Application number: 26151525.8
(22) Date of filing: 13.01.2026
(51) Int. Cl.: B62D 21/11, B62D 21/15, B62D 27/06

(54) **FRONT STRUCTURE FOR ELECTRIC VEHICLE**

(30) Priority: 12.03.2025 JP 2025039357
(71) Applicant: Suzuki Motor Corporation, Hamamatsu-shi, Shizuoka 432-8611 (JP)
(72) Inventor: KITAIZUMI, Toshiharu, Hamamatsu-shi, 432-8611 (JP)
(74) Representative: Plasseraud IP

(57) **Abstract**

[Problem to be Solved] To reduce damage to an electrical component mounted in a powertrain compartment when an impact load is applied to a front portion of an electric vehicle.

[Solution] A front structure for an electric vehicle includes side members 10, a subframe 36 extending in a width direction so as to couple vehicle body side portions on respective sides, and an electrical component attached to the subframe 36, a fragile portion 11 is provided at a middle portion of each of the side members 10, the fragile portion 11 having rigidity lower than a rear portion of the side members 10 and being configured to be bendable so as to protrude outward when a load is applied to a front portion of the side members 10, and coupling between each of the vehicle body side portions and the subframe 36 is configured to be releasable when the fragile portion 11 of the corresponding side members 10 is bent.

## Description

### [Technical Field]

The present invention relates to front structures for electric vehicles.

### [Background Art]

A powertrain compartment in which a drive device including an electric motor is disposed is provided at, for example, a vehicle front portion of an electric vehicle. In addition, a large-capacity battery pack is included in the electric vehicle. The battery pack is disposed, for example, on the lower side of a floor portion of a vehicle compartment located on the vehicle rear side of the powertrain compartment.

In the powertrain compartment, a plurality of electrical components electrically connected to the battery pack are disposed, and in addition, a harness for supplying electric power from the battery pack to the electrical components is routed.
The electrical components include the above-described drive device and a control device for controlling the drive device. The electrical components have rigidity and strength lower than members constituting a vehicle body frame, and thus, need to be protected from an impact load generated by a collision or the like.

For example, Patent Literature 1 discloses a structure including electrical components and a frame on which the electrical components are mounted. The frame of this example includes a plurality of cross members and a connection member connecting them, and the electrical components are disposed on the front side of the rear end of a rear cross member disposed closest to the rear side among the plurality of cross members. When an impact load is applied and the electrical components and the like move toward the rear side, the rear cross member collides with a vehicle body structure located at a rear portion of the powertrain compartment earlier than the electrical components, thereby attempting to reduce damage to the electrical components.

### [Citation List]

### [Patent Literature]

[Patent Literature 1] JP 2021-066340 A

### [Summary of Invention]

### [Problem to be Solved by the Invention]

In the structure of the above-described example, the frame on which electrical components are mounted needs to withstand an impact load. Thus, a plurality of frames including the rear cross member need to ensure predetermined rigidity and strength. Furthermore, in order to protect the electrical components, it is necessary to sufficiently ensure a stroke for the electrical components and the frame to move toward the rear side, and absorb an impact load.

However, in a relatively small-sized vehicle, space in the powertrain compartment is limited, and space for absorbing an impact load may also be limited. Thus, when the structure of the above-described example is applied to a small-sized vehicle, it may be difficult to dispose a frame with high rigidity and to sufficiently ensure a space for absorbing impact.

Furthermore, in the structure of the above-described example, the frame on which electrical components are mounted has high rigidity, and thus, when the frame moves toward the vehicle rear side and collides with the vehicle body structure located at the rear portion of the powertrain compartment, the vehicle body structure may further move toward the rear side and displace a dash panel rearward. In addition, if an electrical component that receives electric power supply from the battery pack is damaged, electric power supply to the drive device may be stopped. Thus, in the structure of the above-described example, there has been room for improvement in reducing the likelihood that the electrical components are damaged when subjected to an impact load such as a frontal collision.

The present invention is intended to solve the above-described problem and its object is to provide a front structure for an electric vehicle, which is capable of reducing damage to an electrical component mounted in a powertrain compartment when an impact load is applied to a front portion of the electric vehicle.

### [Means for Solving the Problem]

A front structure for an electric vehicle according to the present invention for achieving the above-described object includes: side members disposed with a spacing therebetween on respective outer sides in a vehicle width direction at a vehicle front portion, joined to vehicle body side portions on the respective outer sides in the vehicle width direction, and extending in a vehicle front-rear direction; a subframe extending in the vehicle width direction so as to couple the vehicle body side portions on the respective sides in the vehicle width direction; an electrical component attached to the subframe. In the front structure for the electric vehicle, a fragile portion is provided at a middle portion of each of the side members in the vehicle front-rear direction, the fragile portion having rigidity lower than a rear portion of the side member and being configured to be bendable so as to protrude outward in the vehicle width direction when a load is applied to a front portion of the side member, and coupling between each of the vehicle body side portions and the subframe is configured to be releasable when the fragile portion of the corresponding side member is bent.

### [Advantageous Effect of Invention]

According to the present invention, it is possible to provide a front structure for an electric vehicle, which is capable of reducing damage of an electrical component mounted in a powertrain compartment when an impact load is applied to a front portion of the electric vehicle.

### [Brief Description of Drawings]

[Figure 1] Figure 1 is a schematic perspective view illustrating an embodiment of a front structure for an electric vehicle according to the present invention.
[Figure 2] Figure 2 is a schematic perspective view illustrating a state in which an electrical component in Figure 1 is removed.
[Figure 3] Figure 3 is a perspective view of a side member, an extension reinforcement member, and the like in Figure 2 when viewed from the vehicle inner side.
[Figure 4] Figure 4 is a schematic sectional view in the direction of arrow A-A in Figure 1.
[Figure 5] Figure 5 is a schematic end face diagram in the direction of arrow B-B in Figure 1.
[Figure 6] Figure 6 is a cross-sectional view in the direction of arrow C-C in a state in which a subframe in Figure 2 is removed.
[Figure 7] Figure 7 is an end face diagram in the direction of arrow C-C in Figure 2.
[Figure 8] Figure 8 is a perspective view of a section in the direction of arrow C-C in Figure 2 when viewed from the vehicle front side.
[Figure 9] Figure 9 is a schematic plan view schematically illustrating a state in which illustration of the electrical component in Figure 1 is omitted.
[Figure 10] Figure 10 is a schematic plan view schematically illustrating a state after an impact load is applied to a vehicle front portion in Figure 9.

### [Mode for Carrying out the Invention]

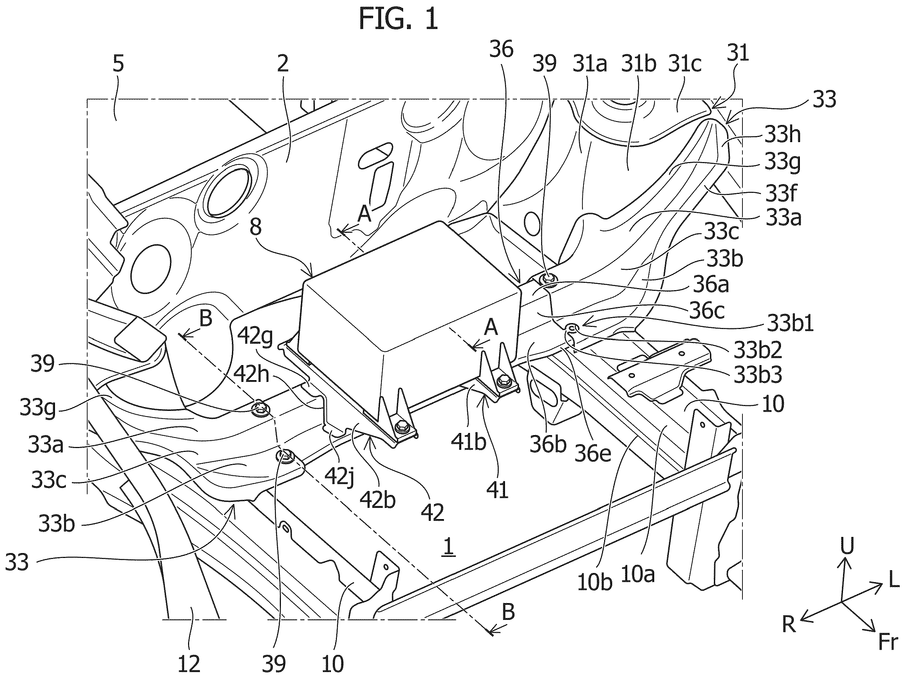

An embodiment of a front structure for an electric vehicle according to the present invention will be described below with reference to the drawings (Figures 1 to 10). Note that, in the drawings, the direction of arrow Fr indicates the front side in the vehicle front-rear direction. In the description of the embodiment, "front portion (front end) and rear portion (rear end)" correspond to a front portion and a rear portion, respectively, in the vehicle front-rear direction. In addition, arrows R and L indicate the right side and the left side, respectively, as viewed by a passenger facing the vehicle front side. Furthermore, arrow U indicates the upper side in the vehicle up-down direction.

The front structure for the electric vehicle of the present embodiment includes side members 10 disposed with a spacing therebetween on respective outer sides in the vehicle width direction at a vehicle front portion, joined to vehicle body side portions on the respective outer sides in the vehicle width direction, and extending in the vehicle front-rear direction, a subframe 36 extending in the vehicle width direction so as to couple the vehicle body side portions on the respective sides in the vehicle width direction, and an electrical component 8 attached to the subframe 36. In the front structure for the electric vehicle, a fragile portion 11 is provided at a middle portion of each of the side members 10 in the vehicle front-rear direction, the fragile portion 11 having rigidity lower than a rear portion of the side member 10 and being configured to be bendable so as to protrude outward in the vehicle width direction when a load is applied to a front portion of the side member 10, and coupling between each of the vehicle body side portions and the subframe 36 is configured to be releasable when the fragile portion 11 of the corresponding side member 10 is bent.

Members constituting the front structure for the electric vehicle of the present embodiment will be described below. The front structure of the present embodiment is a structure in a powertrain compartment 1 located at the vehicle front portion.

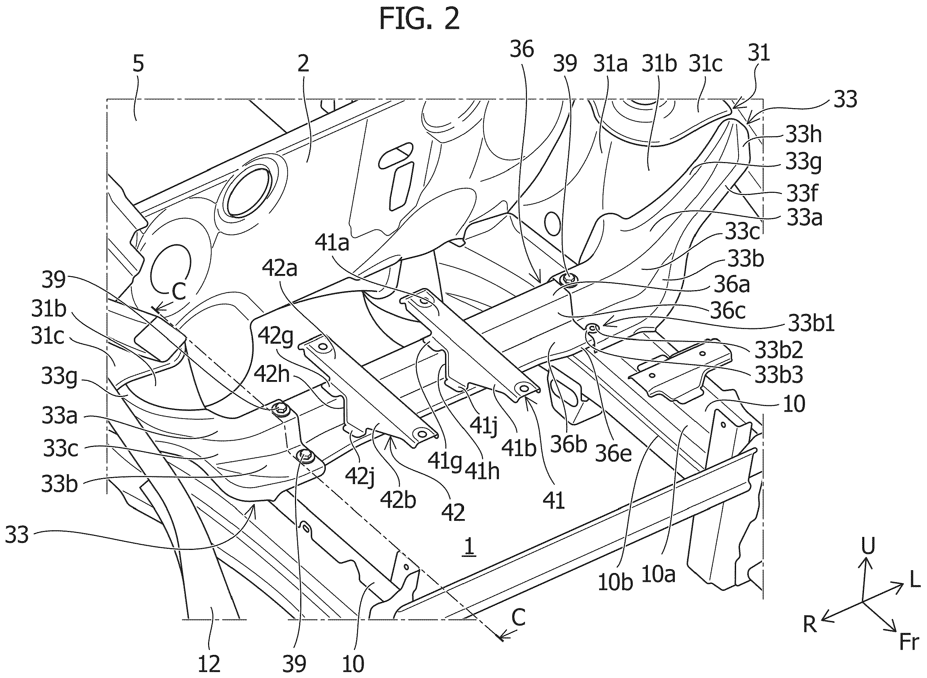

As illustrated in Figures 1 and 2, the powertrain compartment 1 is a space provided on the vehicle front side of a vehicle compartment (not illustrated) in which passenger sheets (not illustrated) and the like are disposed, and is disposed, for example, on the vehicle front side of a dash panel 2. A drive device 3 as a power source, the electrical component 8 for controlling the drive device 3, and the like are disposed inside the powertrain compartment 1. The dash panel 2 is a metal panel dividing the vehicle compartment (passenger compartment) and the powertrain compartment 1, extends in the vehicle width direction so as to connect both side portions of a vehicle body in the vehicle width direction, and extends from a front portion of a floor panel (not illustrated) constituting a floor portion of the vehicle compartment toward the vehicle upper side.

Note that, as illustrated in Figures 1 and 2, a battery pack 5 is disposed on the lower side of the floor portion of the vehicle compartment, which is located on the vehicle rear side of the dash panel 2. The battery pack 5 of the present embodiment is a so-called heavy weight object disposed on the lower side of a front floor panel constituting the floor portion and has a substantially rectangular parallelepiped shape extending in the vehicle front-rear direction and the vehicle width direction.

In addition, as illustrated in Figures 1 and 2, the side members 10, strut towers 31, extension reinforcement members 33, the subframe 36, and brackets 41 and 42 are disposed in the powertrain compartment 1 of the present embodiment. Each member will be described below.

The side members 10 are disposed on the respective sides in the vehicle width direction at the vehicle front portion and disposed on the inner side of front wheels (not illustrated) in the vehicle width direction. The side members 10 are highly rigid members formed of a metallic material, constituting part of a vehicle body frame. Each side member 10 has a closed sectional structure of a substantially rectangular shape, thereby ensuring predetermined rigidity.

The side members 10 located on the vehicle front side of the dash panel 2 extend in the vehicle front-rear direction, and the side members 10 located on the lower side of the dash panel 2 extend outward in the vehicle width direction as they extend toward the vehicle rear side and are joined to side sills (not illustrated). Similarly to the side members 10, the side sills are highly rigid members formed of a metallic material, constituting part of the vehicle body frame. The side sills of this example extend in the vehicle front-rear direction and are joined to outer portions of the floor panel in the vehicle width direction.

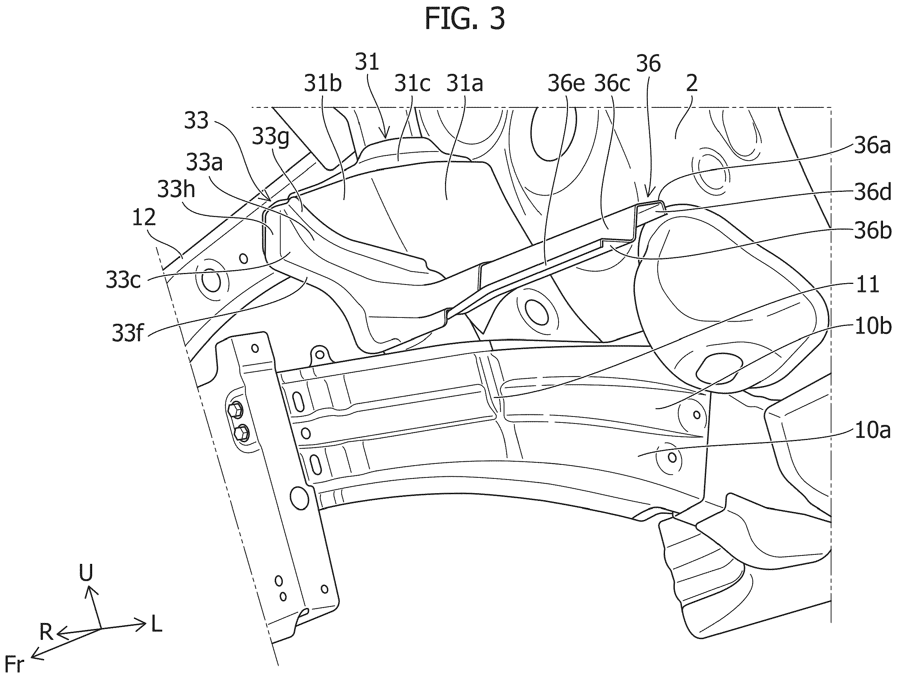

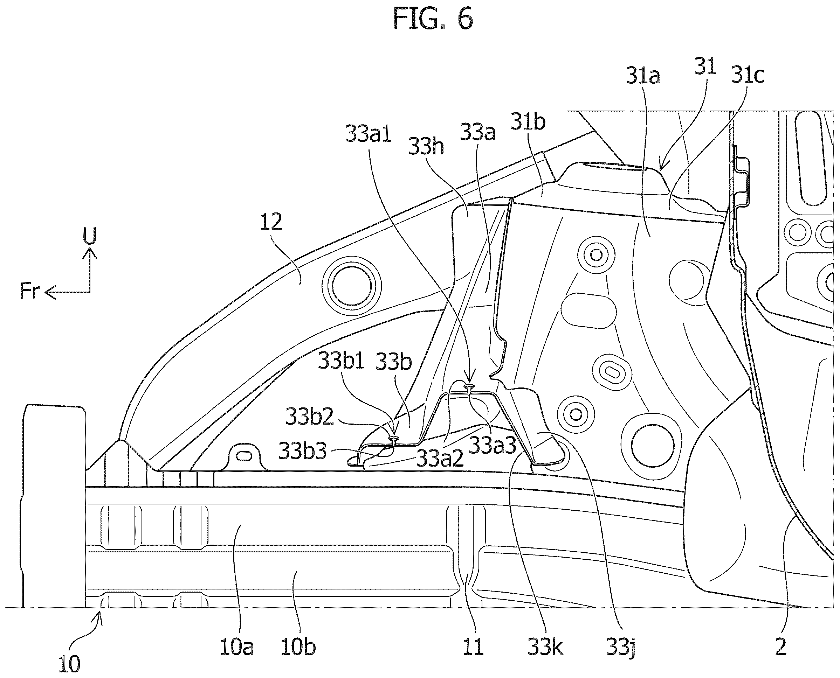

As illustrated in Figures 3 and 6, an inner recessed portion 10b recessed outward in the vehicle width direction and extending in the vehicle front-rear direction is provided at a middle portion of an inner wall portion 10a of each side member 10 in the vehicle up-down direction. The upper and lower ends of the inner recessed portion 10b have ridges to ensure predetermined rigidity against a load applied in the vehicle front-rear direction. In other words, the inner recessed portion 10b functions as a bead that increases the rigidity of the inner wall portion 10a.

As illustrated in Figures 3 and 6, each side member 10 of the present embodiment includes the fragile portion 11. The fragile portion 11 is provided at the middle portion of the inner wall portion 10a of the side member 10 in the vehicle front-rear direction and formed with rigidity lower than the rear portion of the side member 10.

The fragile portion 11 of the present embodiment is a recessed groove recessed outward in the vehicle width direction and extending in the vehicle up-down direction, and continuously extends from the upper end of the inner wall portion 10a to the lower end thereof. As illustrated in Figures 3 and 6, the width of the recessed groove of the fragile portion 11 in the vehicle front-rear direction, which is located on the upper side of the inner wall portion 10a, is substantially constant from the upper end of the inner wall portion 10a to the upper end of the inner recessed portion 10b. The width of the fragile portion 11 provided at the inner recessed portion 10b is smaller as it extends downward from the upper end of the inner recessed portion 10b. The width of the recessed groove of the fragile portion 11, which is located on the lower side of the inner recessed portion 10b, may be substantially constant from the lower end of the inner recessed portion 10b to the lower end of the inner wall portion 10a, although detailed illustration thereof is omitted. When an impact load due to a frontal collision or the like is input to the front end of the side members 10, the fragile portion 11 can deform to bend so as to be convex outward in the vehicle width direction.

The vehicle body side portions in the front structure of the present embodiment will be described next. As illustrated in Figures 1 to 3 and 6, each vehicle body side portion of the present embodiment is joined to the corresponding side member 10 and includes a wall portion extending upward from the side member 10. Details of each vehicle body side portion of the present embodiment will be described below. Each vehicle body side portion includes a strut tower 31 and an extension reinforcement member 33.

As illustrated in Figures 2, 3, and 6, the strut tower 31 is disposed on the vehicle front side at an outer portion of the dash panel 2 in the vehicle width direction, joined to the corresponding one of the side members 10 on the respective sides in the vehicle width direction, and extends in the vehicle up-down direction. The strut tower 31 of the present embodiment is formed of a metallic material and includes an inner surface portion 31a, a front surface portion 31b, and a top surface portion 31c.

The inner surface portion 31a extends from an upper portion of the side member 10 toward the vehicle upper side and has a wall surface facing inward in the vehicle width direction. A lower portion of the inner surface portion 31a is joined to an outer portion in the vehicle width direction at the upper portion of the side member 10 by spotwelding, and as illustrated in Figures 3, 6, and 7, a flange is provided at a rear portion of the inner surface portion 31a and joined to the dash panel 2 by spotwelding.

The front surface portion 31b has a wall surface extending outward in the vehicle width direction from a front end portion of the inner surface portion 31a. The inner surface portion 31a and the front surface portion 31b are integrally formed, and the top surface portion 31c is configured as a member separated from the inner surface portion 31a and the front surface portion 31b. The top surface portion 31c is joined to an upper portion of the inner surface portion 31a and an upper portion of the front surface portion 31b. An extension reinforcement member 33 is joined to the front surface portion 31b. The extension reinforcement member 33 will be described later.

Although not illustrated, a coil spring, a shock absorber, and the like constituting a suspension are disposed inside the strut tower 31, in other words, in a space outside the inner surface portion 31a in the vehicle width direction. An upper portion of the shock absorber is attached to the top surface portion 31c. The strut tower 31 has high rigidity in the vehicle up-down direction, in particular, and can effectively receive a load transferred from the shock absorber or the like.

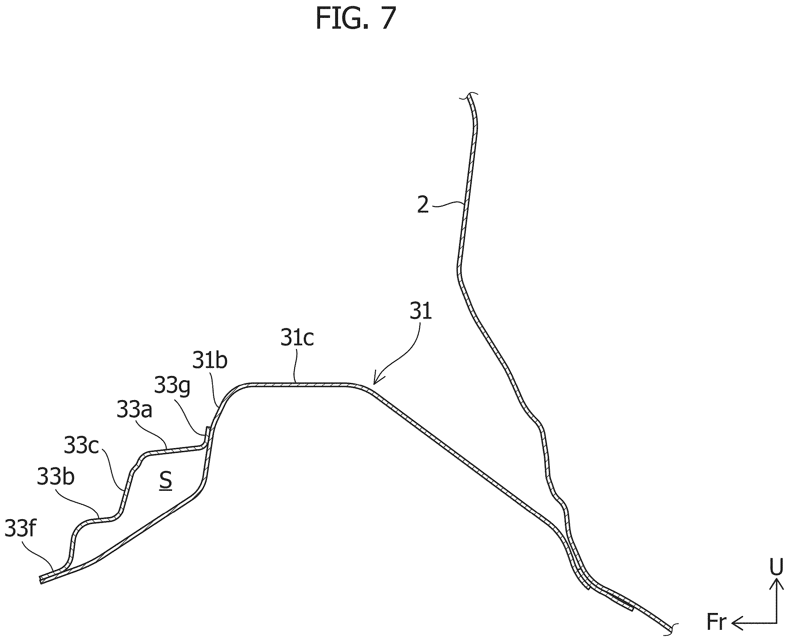

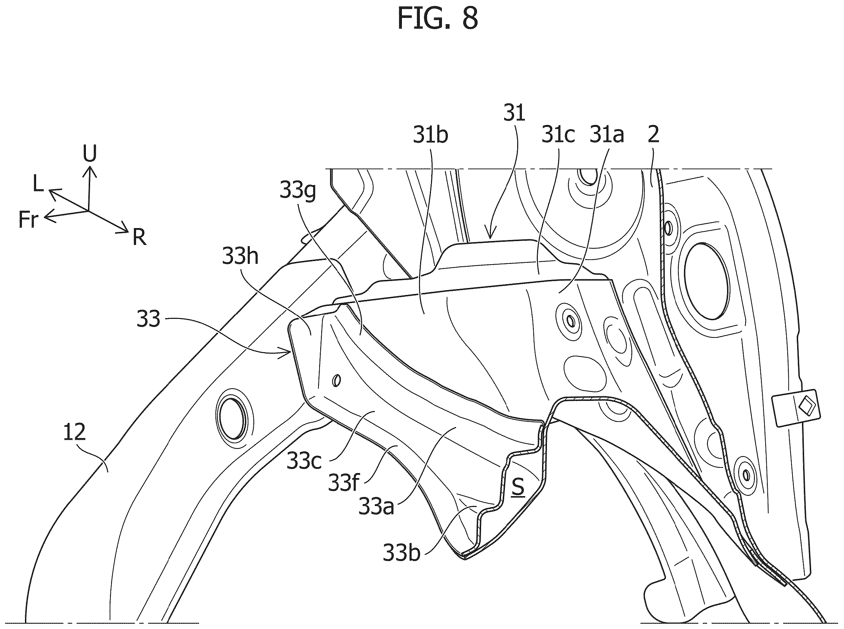

Each extension reinforcement member 33 will be described next. As illustrated in Figures 1 to 3, 6, and 8, the extension reinforcement member 33 is joined to the front surface portion 31b, bulges toward the vehicle front side, and extends inward in the vehicle width direction relative to the inner surface portion 31a. As illustrated in Figures 7 and 8, a closed sectional structure S is constituted by the extension reinforcement member 33 and the front surface portion 31b. Accordingly, the rigidity of each vehicle body side portion including the strut tower 31 is ensured.

As illustrated in Figures 2, 3, 5 and 8, each extension reinforcement member 33 includes an upper tier 33a, a lower tier 33b, and a vertical wall portion 33c. The upper tier 33a is a part protruding from the front surface portion 31b toward the vehicle front side and facing upward. The upper tier 33a is tilted upward as it extends outward in the vehicle width direction. A rear flange 33g protruding upward is provided at a rear portion of the upper tier 33a located on the outer side in the vehicle width direction and is joined to the front surface portion 31b of the strut tower 31 by spotwelding. A tilted wall 33k is provided at a rear portion of the upper tier 33a located on the inner side in the vehicle width direction.

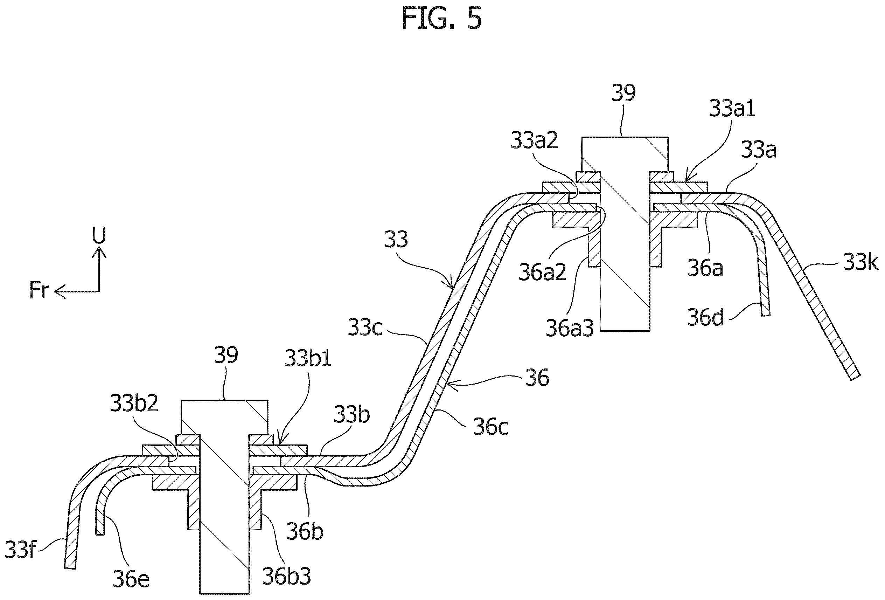

As illustrated in Figures 5 and 6, the tilted wall 33k is tilted toward the vehicle rear side as it extends toward the vehicle lower side. A vertical flange 33j is provided at an outer portion of the tilted wall 33k in the vehicle width direction. The vertical flange 33j protrudes from the outer end of the tilted wall 33k in the vehicle width direction toward the vehicle rear side and extends in the vehicle up-down direction. The vertical flange 33j is joined to the inner surface portion 31a of the strut tower 31 by spotwelding.

As illustrated in Figures 6 and 8, the vertical wall portion 33c extends from the front end of the upper tier 33a toward the vehicle lower side and has a wall surface facing the vehicle front side. The upper end of the vertical wall portion 33c is tilted upward along the shape of the front end of the upper tier 33a as it extends outward in the vehicle width direction. An outer lateral flange 33h protruding toward the vehicle front side is provided at the outer end of the vertical wall portion 33c in the vehicle width direction and joined to the inner wall of a cowl side front member 12 by spotwelding.

As illustrated in Figures 1, 2, and 6, the lower tier 33b is a part extending from the lower end of the vertical wall portion 33c located on the inner side in the vehicle width direction toward the vehicle front side and has a flat surface facing the vehicle upper side. An upper surface portion of the side member 10 is disposed on the lower side of the lower tier 33b with a spacing therebetween. A front flange 33f protruding toward the vehicle front side is provided at the lower end of the vertical wall portion 33c located on the outer side in the vehicle width direction relative to the front end of the lower tier 33b and the lower tier 33b and is joined to, for example, a wheelhouse inner panel (not illustrated) by spotwelding. The front flange 33f is curved toward the upper side and the vehicle rear side as it extends outward in the vehicle width direction.

As illustrated in Figures 1 and 2, an upper tier coupling portion 33a1 to which an upper tier 36a of the subframe 36, to be described later, is coupled and is provided at an inner end portion of the upper tier 33a in the vehicle width direction. In addition, a lower tier coupling portion 33b1 to which a lower tier 36b of the subframe 36, to be described later, is coupled and is provided at an inner end portion of the lower tier 33b in the vehicle width direction.

The upper tier coupling portion 33a1 and the lower tier coupling portion 33b1 will be described below. Figure 1 illustrates a state in which no bolt is inserted into the lower tier coupling portion 33b1 on the left side. The lower tier coupling portion 33b1 includes a bolt insertion portion 33b2 and a communication portion 33b3. The bolt insertion portion 33b2 is a substantially circular through-hole and penetrates in the vehicle up-down direction. The communication portion 33b3 penetrates in the vehicle up-down direction and extends from a hole edge of the bolt insertion portion 33b2 to the inner end of the lower tier 33b in the vehicle width direction, and the inner end of the communication portion 33b3 in the vehicle width direction is opened. The length of the communication portion 33b3 in the vehicle front-rear direction is shorter than the diameter of the bolt insertion portion 33b2. Similarly to the lower tier coupling portion 33b1, the upper tier coupling portion 33a1 includes a bolt insertion portion 33a2 and a communication portion 33a3.

The subframe 36 will be described next. As illustrated in Figures 1 and 2, the subframe 36 is disposed on the vehicle front side of the dash panel 2 with a spacing therebetween, and specifically, is disposed on the vehicle front side of the front surface portions 31b of the strut towers 31. The subframe 36 is a member extending in the vehicle width direction so as to connect the extension reinforcement members 33 on the respective sides in the vehicle width direction, and is formed of a metallic material.

As illustrated in Figures 3, 4, and 5, the subframe 36 includes the upper tier 36a, the lower tier 36b, a vertical wall portion 36c, a rear wall portion 36d, and a front wall portion 36e. The upper tier 36a has a flat surface extending in the vehicle width direction and facing the vehicle upper side. The vertical wall portion 36c has a wall surface extending from the front end of the upper tier 36a toward the vehicle lower side and facing the vehicle front side. The lower tier 36b has a flat surface extending from the lower end of the vertical wall portion 36c toward the vehicle front side and facing the vehicle upper side.

The rear wall portion 36d is a part protruding from the rear end of the upper tier 36a toward the vehicle lower side, and the front wall portion 36e is a part protruding from the front end of the lower tier 36b toward the vehicle lower side. In the vehicle up-down direction, outer portions of the lower end of the subframe 36 in the vehicle width direction, in other words, outer portions of the lower end of the front wall portion 36e in the vehicle width direction, are disposed on the vehicle upper side relative to the upper surface portions of the side members 10 with spacing therebetween.

As illustrated in Figures 1 and 5, an upper tier through hole 36a2 penetrating in the vehicle up-down direction is formed at an outer portion of the upper tier 36a in the vehicle width direction. In addition, for example, a welding nut 36a3 is joined on the lower surface side of the upper tier 36a. The welding nut 36a3 is provided such that a bolt inserted into the upper tier through hole 36a2 can be screwed. Like the upper tier 36a, a lower tier through hole 36b2 penetrating in the vehicle up-down direction is formed at an outer portion of the lower tier 36b in the vehicle width direction. Like the upper tier 36a, a welding nut 36b3 is joined on the lower surface side of the lower tier 36b.

In the present embodiment, as illustrated in Figure 5, a part where the upper tier through hole 36a2 and the welding nut 36a3 are provided at the outer portion of the upper tier 36a in the vehicle width direction is coupled to the upper tier coupling portion 33a1 of the corresponding extension reinforcement member 33. In this example, the outer portion of the upper tier 36a of the subframe 36 in the vehicle width direction is disposed in an overlapping manner on the lower side of the upper tier coupling portion 33a1 of the corresponding extension reinforcement member 33 and coupled (fastened) by fastening members such as a bolt and a welding nut. Similarly, a part where the lower tier through hole 36b2 and the welding nut 36b3 are provided at the outer portion of the lower tier 36b in the vehicle width direction is disposed on the lower side of the lower tier coupling portion 33b1 and coupled to the lower tier coupling portion 33b1.

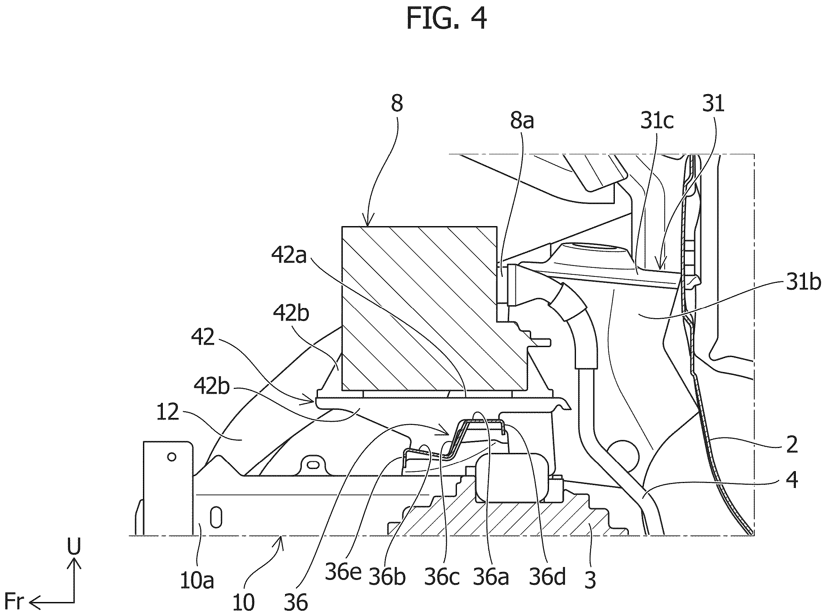

The electrical component 8 will be described next. As illustrated in Figures 2 and 4, the electrical component 8 is attached to the subframe 36 through the brackets 41 and 42. The electrical component 8 of the present embodiment is, for example, a control device for supplying electric power to the drive device 3 and having a substantially rectangular parallelepiped shape as a whole. A connector 8a to which a harness 4 is connected is provided at an upper portion of a rear portion of the electrical component 8 (Figure 4).

The brackets 41 and 42 for attaching the electrical component 8 include a left-side bracket 41 and a right-side bracket 42. As illustrated in Figures 1 and 2, the left-side bracket 41 is joined to a middle portion of the subframe 36 in the vehicle width direction by spotwelding, in a state of being disposed with spacing therebetween.

As illustrated in Figure 2, the left-side bracket 41 is disposed slightly on the left side relative to the center of the subframe 36 in the vehicle width direction and is joined by spotwelding. The left-side bracket 41 is a metal member extending in the vehicle front-rear direction, and the front end of the left-side bracket 41 is disposed on the vehicle front side relative to the front end of the subframe 36. The rear end of the left-side bracket 41 is disposed on the vehicle rear side relative to the rear end of the subframe 36 and disposed slightly on the rear side relative to the front end of the corresponding strut tower 31 in the vehicle front-rear direction (Figure 4). The left-side bracket 41 includes an upper surface portion 41a, side wall portions 41b, and a plurality of flanges 41g and 41j joined to the subframe 36. The upper surface portion 41a has a flat surface facing upward and extends in the vehicle front-rear direction.

As illustrated in Figure 2, at least one through-hole penetrating in the vehicle up-down direction is formed at each of front and rear portions of the upper surface portion 41a. In Figure 2, one through-hole is illustrated at each of the front and rear portions of the upper surface portion 41a, but the present invention is not limited thereto, and for example, two through-holes may be disposed at each of the front and rear portions with a spacing therebetween in the vehicle front-rear direction. The electrical component 8 is attached to the front and rear portions of the upper surface portion 41a.

The side wall portions 41b extend from end portions of the upper surface portion 41a on the respective sides in the vehicle width direction toward the vehicle lower side. In a lower portion of each side wall portion 41b, a part overlapping the subframe 36 is formed along the shapes of the upper tier 36a, the vertical wall portion 36c, and the lower tier 36b of the subframe 36.

The upper tier flanges 41g protruding outward from the center of the left-side bracket 41 in the vehicle width direction are provided at the lower ends of the side wall portions 41b disposed on the upper tier 36a, and the upper tier flanges 41g are joined to the upper tier 36a of the subframe 36 by spotwelding. The side wall portions 41b formed along the vertical wall portion 36c of the subframe 36 extend in the vehicle up-down direction. Flanges 41h are provided at this part. The flanges 41h may be joined to, for example, the vertical wall portion 36c by spotwelding.

Lower tier flanges 41j protruding outward from the center of the left-side bracket 41 in the vehicle width direction are provided at the lower ends of the side wall portions 41b disposed on the lower tier 36b of the subframe 36, and the lower tier flanges 41j are joined to the lower tier 36b of the subframe 36 by spotwelding.

The lower ends of the side wall portions 41b located on the vehicle front side relative to the subframe 36 are tilted toward the vehicle upper side as they extend toward the vehicle front side. The lower ends of the side wall portions 41b located on the vehicle rear side relative to the subframe 36 linearly extend from the upper tier 36a of the subframe 36 toward the vehicle rear side.

The right-side bracket 42 is configured in the same manner as the left-side bracket 41 and is joined to the subframe 36. The right-side bracket 42 is disposed between the center of the subframe 36 in the vehicle width direction and the right end of the subframe 36 and is joined by spotwelding. Similarly to the left-side bracket 41, the right-side bracket 42 includes an upper surface portion 42a, side wall portions 42b, and flanges 42g and 42j joined to the subframe 36.

As illustrated in Figure 4, the drive device 3 is disposed on the vehicle lower side of the subframe 36 with a spacing therebetween. Although detailed description with illustration is omitted, the drive device 3 may be supported by a motor frame through a mount member, the motor frame being disposed on the vehicle lower side of the side members 10 with a spacing therebetween. The drive device 3 is disposed such that, for example, a front end portion of the drive device 3 is located slightly on the front side relative to front end portions of the left-side bracket 41 and the right-side bracket 42. Note that the drive device 3 may be disposed such that the front end portion of the drive device 3 is aligned with the front end portions of the left-side bracket 41 and the right-side bracket 42 in the vehicle front-rear direction, or may be disposed such that the front end portion of the drive device 3 is located on the rear side relative to the front end portions of the left-side bracket 41 and the right-side bracket 42.

As illustrated in Figure 4, the harness 4 extends from the battery pack 5 toward the vehicle front side and is connected to, for example, the connector 8a of the electrical component 8 disposed in the powertrain compartment 1. In this example, as illustrated in Figure 4, the harness 4 extends from the connector 8a toward the vehicle lower side and is routed between the dash panel 2 and rear portions of the left-side bracket 41 and the right-side bracket 42. The harness 4 located on the rear side and the lower side relative to the left-side bracket 41 and the right-side bracket 42 extends with a tilt toward the vehicle rear side as it extends downward, and is routed toward the rear side of the drive device 3. Although description with illustration is omitted, the harness 4 located on the rear side of the drive device 3 is connected to a front portion of the battery pack 5.

With the configuration of the present embodiment, even if an impact load is applied to the front portion of the electric vehicle and the electrical component 8 mounted in the powertrain compartment 1 moves toward the vehicle rear side, the fragile portions 11 of the side members 10 bend so as to protrude outward in the vehicle width direction and coupling between the subframe 36 and the extension reinforcement members 33 is released, thereby reducing damage of the electrical component 8. The following describes the behavior of the vehicle front portion when an impact load is applied to the vehicle front portion in the present embodiment.

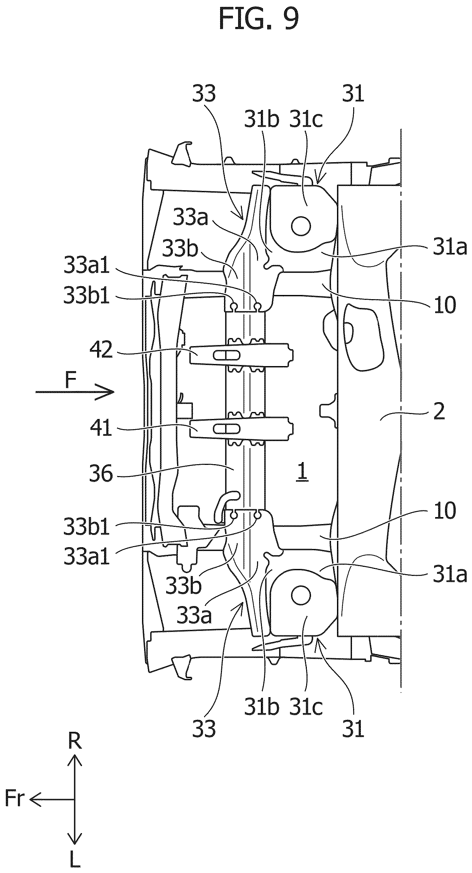

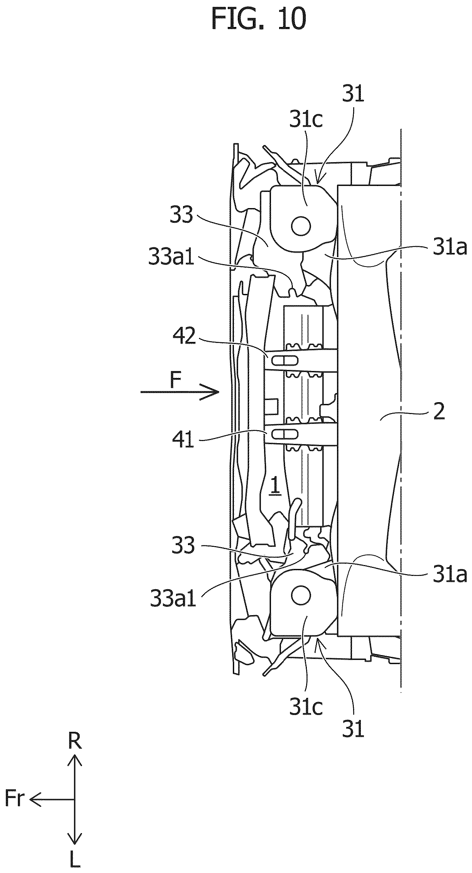

For example, when an object (colliding object) having a predetermined length in the vehicle up-down direction collides with the front portion of the vehicle, an impact load generated by the collision is applied to the front portion of the electric vehicle. In this case, the impact load is applied to, for example, the front portions of the side members 10 earlier than the electrical component 8. When the impact load is applied to the front portions of the side members 10, the fragile portion 11 bends so as to protrude outward in the vehicle width direction as illustrated in Figures 9 and 10.

The fragile portions 11 are provided at the inner wall portions 10a of the side members 10 and are constituted by the recessed grooves recessed toward the vehicle outer side, and thus, when an impact load is applied, the inner wall portions 10a of the side members 10 bend outward in the vehicle width direction. With the deformation of the fragile portions 11, outer wall portions of the side members 10 further bend outward in the vehicle width direction. By the deformation of the fragile portions 11, some of the energy of the impact load is absorbed through conversion into some of the deformation energy.

As described above, some of an impact load is absorbed by the fragile portions 11 of the side members 10, whereas the remainder is transferred to, for example, the rear side of the powertrain compartment 1. Some of the load transferred to the rear side of the powertrain compartment 1 is transferred to, for example, front portions of the left-side bracket 41 and the right-side bracket 42 joined to the subframe 36. In other words, a load causing movement toward the vehicle rear side is applied to the subframe 36 and the left-side bracket 41 and the right-side bracket 42.

As illustrated in Figures 9 and 10, as the fragile portions 11 of the side members 10 bend outward, a load causing deformation outward in the vehicle width direction is applied to the inner surface portions 31a of the strut towers 31 joined to the outer wall portions. Accordingly, a load causing outward deformation is further applied to the front surface portions 31b, and the extension reinforcement members 33 further move outward in the vehicle width direction. In other words, the subframe 36 moves toward the vehicle rear side, and in addition, the extension reinforcement members 33 move outward in the vehicle width direction, and accordingly, the subframe 36 and the extension reinforcement members 33 move in directions separating from each other. Coupling between the subframe 36 and the extension reinforcement members 33 is released.

At that time, since the upper tier coupling portions 33al and the lower tier coupling portions 33b1 are provided with communication portions, bolts and welding nuts as fastening members can be separated from the upper tier coupling portions 33a1 and the lower tier coupling portions 33b1 together with the subframe 36.

In this case, when part of an impact load transferred to the rear side of the powertrain compartment 1 is applied to, for example, the front portions of the left-side bracket 41 and the right-side bracket 42 joined to the subframe 36, the front portions of the left-side bracket 41 and the right-side bracket 42 deform so as to be flipped toward the vehicle upper side, rotating toward the vehicle upper side about middle portions of the left-side bracket 41 and the right-side bracket 42 in the vehicle front-rear direction and their vicinities.

At that time, torsional deformation about a virtual line extending in the vehicle width direction occurs in the subframe 36 to which the left-side bracket 41 and the right-side bracket 42 are joined. Since the torsional deformation acts in addition to movement of the subframe 36 toward the vehicle rear side, coupling between the subframe 36 and the extension reinforcement members 33 is effectively released. The electrical component 8 can move rearward when coupling between the subframe 36 and the extension reinforcement members 33 is released.

As illustrated in Figure 4, the drive device 3, the electrical component 8, and the like are disposed on the vehicle front side of the dash panel 2. Thus, when the drive device 3 potentially moves toward the vehicle rear side when receiving an impact load due to a frontal collision or the like. In order to reduce the amount of rearward movement of the dash panel 2 when an impact load such as a frontal collision is applied to the vehicle front portion, for example, highly rigid members are preferably not densely disposed in a region between the dash panel 2 and each of the left-side bracket 41, the right-side bracket 42, and the drive device 3. In the present embodiment, the harness 4, a pipe system, and the like are disposed in the region, and highly rigid members are not densely disposed there. This reduces collision of the electrical component 8 with highly rigid members even when part of an impact load is applied to the left-side bracket 41 and the right-side bracket 42 and the electrical component 8 and the like move toward the vehicle rear side.

Accordingly, in the present embodiment, as described above, coupling between the subframe 36 and the extension reinforcement members 33 is released, which makes it possible to reduce deformation of the subframe 36, the left-side bracket 41, and the right-side bracket 42, particularly deformation (crushing deformation) in the vehicle front-rear direction, thereby reducing damage of the electrical component 8 due to an impact load.

In the present embodiment, as described above, the left-side bracket 41 and the right-side bracket 42 extending from the vehicle front side of the subframe 36 toward the vehicle rear side are joined to the subframe 36, and the electrical component 8 is attached to the left-side bracket 41 and the right-side bracket 42, as illustrated in Figures 1 and 2. Furthermore, the lengths of the left-side bracket 41 and the right-side bracket 42 in the vehicle front-rear direction are set to be longer than the length of the electrical component 8 in the vehicle front-rear direction, and the front portions of the left-side bracket 41 and the right-side bracket 42 are disposed on the vehicle front side relative to the electrical component 8.

Since the lengths of the left-side bracket 41 and the right-side bracket 42 in the vehicle front-rear direction are set as described above, it is possible to stably install the electrical component 8. Furthermore, since the left-side bracket 41 and the right-side bracket 42 are provided, it is possible to reduce direct collision of devices and members located on the vehicle front side of the electrical component 8 with the electrical component 8 when the electrical component 8 moves toward the vehicle rear side upon application of an impact load. Furthermore, in the present embodiment, since the rear portions of the left-side bracket 41 and the right-side bracket 42 are disposed on the vehicle rear side relative to the rear portion of the electrical component 8 as illustrated in Figure 4, it is possible to suppress direct contact of the electrical component 8 with members and the like located at a rear portion of the powertrain compartment 1.

In the present embodiment, the subframe 36 is disposed on the upper side relative to the upper portions of the side members 10, where the fragile portions 11 are located, with spacing therebetween. Since the subframe 36 and the side members 10 are disposed with spacing therebetween, it is possible to suppress the subframe 36 from encumbering deformation of the side members 10. Furthermore, since the subframe 36 and the fragile portions 11 are disposed such that their positions in the vehicle front-rear direction substantially align, a deformation mode of the strut towers 31 in the width direction, including the extension reinforcement members 33, occurs when the fragile portions 11 bend as described above and the extension reinforcement members 33 move outward in the vehicle width direction, and accordingly, coupling between the subframe 36 and the extension reinforcement members 33 can be effectively released.

In the present embodiment, the vehicle body side portions include the inner surface portions 31a, the front surface portions 31b, and the extension reinforcement members 33, and outer portions of the subframe 36 in the vehicle width direction are coupled to inner portions of the extension reinforcement members 33 in the vehicle width direction, which are located on the inner side in the vehicle width direction relative to the inner surface portions 31a. In other words, the extension reinforcement members 33 protrude inward in the vehicle width direction relative to the inner surface portions 31a, and the subframe 36 is coupled to end portions of their protruding parts. In the present embodiment, the upper tier coupling portions 33a1 and the lower tier coupling portions 33b1 are disposed on the inner side in the vehicle width direction relative to the inner surface portions 31a.

Accordingly, the length of the subframe 36 in the vehicle width direction can be set shorter. For example, the length of the subframe 36 in the vehicle width direction may be longer than the length of the electrical component 8 in the vehicle width direction, and in addition, outer end portions of the subframe 36 in the vehicle width direction may be disposed on the outer side in the vehicle width direction relative to side portions of the electrical component 8. By setting the length of the subframe 36 in the vehicle width direction to be short, for example, it is possible to suppress the subframe 36 from contacting members and the like around the subframe 36 when moving toward the vehicle rear side. For example, it is possible to suppress side portions of the subframe 36 from contacting the inner surface portions 31a of the strut towers 31 and the like.

In the present embodiment, the upper tier coupling portions 33a1 and the lower tier coupling portions 33b1 are disposed on the inner side in the vehicle width direction relative to the inner wall portions 10a of the side members 10. For example, relatively small members including small-sized electrical components such as sensors and lock members for electric wiring are disposed at the upper portions of the side members 10 in some cases. Since the upper tier coupling portions 33a1 and the like are provided on the inner side in the vehicle width direction relative to the inner wall portions 10a of the side members 10, it is possible to suppress the subframe 36 from contacting the above-described small members and the like when moving rearward.

In the front structure of the present embodiment, the vehicle body side portions (in this example, the upper tier coupling portions 33a1 and the lower tier coupling portions 33b1 of the extension reinforcement members 33) and the outer portions of the subframe 36 in the vehicle width direction (in this example, outer portions of the upper tier 36a and the lower tier 36b in the vehicle width direction) are coupled in a state of overlapping in the vehicle up-down direction, and coupling between the vehicle body side portions and the subframe 36 is released by relative movement of the vehicle body side portions and the subframe 36 in the vehicle width direction.

For example, in the present embodiment, the upper tier coupling portions 33a1 and the lower tier coupling portions 33b1 provided at the extension reinforcement members 33 constituting the vehicle body side portions are provided with communication portions. The communication portions are formed in cutout shapes and are opened on the inner side in the vehicle width direction. Accordingly, coupling can be easily released when the extension reinforcement members 33 and the subframe 36 relatively move in the vehicle width direction.

As described above, the subframe 36 of the present embodiment includes the vertical wall portion 36c facing the vehicle front side, the upper tier 36a protruding from an upper portion of the vertical wall portion 36c toward the vehicle rear side, and the lower tier 36b protruding from a lower portion of the vertical wall portion 36c toward the vehicle front side. The left-side bracket 41 and the right-side bracket 42 are joined to the upper tier 36a and the lower tier 36b.

Accordingly, when a load is applied to the front ends of the left-side bracket 41 and the right-side bracket 42, the load can be applied such that the left-side bracket 41 and the right-side bracket 42 press the subframe 36 toward the rear side. When a load is transferred to the front portions of the left-side bracket 41 and the right-side bracket 42 joined to the subframe 36, the front portions of the left-side bracket 41 and the right-side bracket 42 deform, for example, so as to be flipped toward the vehicle upper side, rotating toward the vehicle upper side about the middle portions of the left-side bracket 41 and the right-side bracket 42 in the vehicle front-rear direction and their vicinities. At that time, torsional deformation about a virtual line extending in the vehicle width direction occurs in the subframe 36 to which the left-side bracket 41 and the right-side bracket 42 are joined. The torsional deformation can release coupling between the subframe 36 and the extension reinforcement members 33.

The vehicle body side portions further include the strut towers 31 joined to the side members 10. As described above, the strut towers 31 are highly rigid structural bodies to which suspension members are attached. In the present embodiment, since the subframe 36 is attached to the strut towers 31 through the extension reinforcement members 33, the subframe 36 is installed in a more stable state. Thus, the electrical component 8 can be stably supported.

In the present embodiment, the extension reinforcement members 33 include the tilted walls 33k, and the rear wall portion 36d of the subframe 36 and the tilted walls 33k are disposed so as to be gradually separated as they extend downward. Thus, right after coupling between the subframe 36 and the extension reinforcement members 33 is released upon application of an impact load, the rear wall portion 36d of the subframe 36 moves toward the vehicle rear side and collides with the tilted walls 33k.

After colliding with the tilted walls 33k, the rear wall portion 36d moves downward in the tilt direction of the tilted walls 33k while deforming the tilted walls 33k. Accordingly, some of an impact load applied to the subframe 36 is absorbed. After the upper tier 36a moves downward beyond the lower ends of the tilted walls 33k, the subframe 36 can move toward the vehicle rear side in a state in which impact is reduced. As a result, the subframe 36 can be prevented from excessively moving toward the vehicle rear side.

The description of the present embodiment is an illustration for describing the present invention and does not limit the invention as claimed in the claims. Furthermore, the configuration of each part of the present invention is not limited to the above embodiment, and various modifications can be made within the technical scope as claimed in the claims.

In the present embodiment, the vehicle body side portions include the extension reinforcement members 33, and the subframe 36 is coupled to the upper tier coupling portions 33a1 and the lower tier coupling portions 33b1 provided at the extension reinforcement members 33, but the present invention is not limited thereto. For example, a configuration is possible in which the subframe 36 is coupled to the inner surface portions 31a of the strut towers 31. Alternatively, the subframe 36 may be joined to the front surface portions 31b of the strut towers 31, and the outer portions of the subframe 36 in the vehicle width direction may be broken when an impact load is received.

### [Reference Signs List]

- 1: Powertrain compartment
- 2: Dash panel
- 3: Drive device
- 4: Harness
- 5: Battery pack
- 8: Electrical component
- 10: Side member
- 10a: Inner wall portion
- 10b: Inner recessed portion
- 11: Fragile portion
- 12: Cowl side front member
- 31: Strut tower
- 31a: Inner surface portion
- 31b: Front surface portion
- 31c: Top surface portion
- 33: Extension reinforcement member
- 33a: Upper tier
- 33a1: Upper tier coupling portion
- 33b: Lower tier
- 33b1: Lower tier coupling portion
- 33c: Vertical wall portion
- 33f: Front flange
- 33g: Rear flange
- 33h: Outer lateral flange
- 33j: Vertical flange
- 33k: Tilted wall
- 36: Subframe
- 36a: Upper tier
- 36b: Lower tier
- 36c: Vertical wall portion
- 36d: Rear wall portion
- 36e: Front wall portion
- 41: Left-side bracket (bracket)
- 41a: Upper surface portion
- 41b: Side wall portion
- 41g: Upper tier flange
- 41h: Flange
- 41j: Lower tier flange
- 42: Right-side bracket (bracket)
- 42a: Upper surface portion
- 42b: Side wall portion
- 42g: Upper tier flange
- 42h: Flange
- 42j: Lower tier flange

## Claims

1. A front structure for an electric vehicle, the front structure comprising:
side members disposed with spacing therebetween on respective outer sides in a vehicle width direction at a vehicle front portion, joined to vehicle body side portions on the respective outer sides in the vehicle width direction, and extending in a vehicle front-rear direction;
a subframe extending in the vehicle width direction so as to couple the vehicle body side portions on the respective sides in the vehicle width direction; and
an electrical component attached to the subframe, the front structure being **characterized in that**:
a fragile portion is provided at a middle portion of each of the side members in the vehicle front-rear direction, the fragile portion having rigidity lower than a rear portion of the side member and being configured to be bendable so as to protrude outward in the vehicle width direction when a load is applied to a front portion of the side member; and
coupling between each of the vehicle body side portions and the subframe is configured to be releasable when the fragile portion of the corresponding side member is bent.

2. The front structure for the electric vehicle according to claim 1, wherein
a bracket extending from a vehicle front side of the subframe toward a vehicle rear side is joined to the subframe, and the electrical component is attached to the bracket,
the length of the bracket in the vehicle front-rear direction is set to be longer than the length of the electrical component in the vehicle front-rear direction, and
a front portion of the bracket is disposed on the vehicle front side of the electrical component.

3. The front structure for the electric vehicle according to claim 1 or 2, wherein the subframe is disposed above the side members with spacing therebetween.

4. The front structure for the electric vehicle according to claim 1 or 2, wherein
each of the vehicle body side portions includes
an inner surface portion extending from an upper portion of the corresponding side member toward a vehicle upper side and facing inward in the vehicle width direction,
a front surface portion extending outward in the vehicle width direction from a front end portion of the inner surface portion, and
an extension reinforcement member joined to the front surface portion, bulging toward a vehicle front side, and extending inward in the vehicle width direction relative to the inner surface portion, and
an outer portion of the subframe in the vehicle width direction is coupled to an inner portion of the extension reinforcement member in the vehicle width direction.

5. The front structure for the electric vehicle according to claim 1 or 2, wherein
each of the vehicle body side portions and an outer portion of the subframe in the vehicle width direction are coupled in a state of overlapping in a vehicle up-down direction, and
coupling between each of the vehicle body side portions and the subframe is released by relative movement between the vehicle body side portion and the subframe in the vehicle width direction.

6. The front structure for the electric vehicle according to claim 2, wherein
the subframe includes a vertical wall portion facing the vehicle front side, an upper tier protruding from an upper portion of the vertical wall portion toward the vehicle rear side, and a lower tier protruding from a lower portion of the vertical wall portion toward the vehicle front side, and
the bracket is joined to the upper tier and the lower tier.

7. The front structure for the electric vehicle according to claim 1, wherein each of the vehicle body side portions includes a strut tower joined to the corresponding side member.

8. The front structure for the electric vehicle according to claim 1, wherein
the subframe includes a rear wall protruding from a rear end of an upper portion of the subframe toward a vehicle lower side, and
each of the vehicle body side portions includes a tilted wall disposed on a rear side of the rear wall and tilted toward a vehicle rear side as the tilted wall extends toward the vehicle lower side.
